(19) Europäisches Patentamt
European Patent Office
Office européen des brevets

(11) **EP 3 385 317 B1**

(12) **EUROPEAN PATENT SPECIFICATION**

(45) Date of publication and mention of the grant of the patent:
**26.02.2020 Bulletin 2020/09**

(51) Int Cl.:
***C08L 7/00*** *(2006.01)*     ***C08K 3/04*** *(2006.01)*

(21) Application number: **18163553.3**

(22) Date of filing: **23.03.2018**

(54) **METHOD FOR PREPARING RUBBER COMPOSITION AND METHOD FOR PREPARING TIRE**

VERFAHREN ZUR HERSTELLUNG EINER KAUTSCHUKZUSAMMENSETZUNG UND VERFAHREN ZUR HERSTELLUNG EINES REIFENS

PROCÉDÉ DE PRÉPARATION DE COMPOSITION DE CAOUTCHOUC ET PROCÉDÉ DE PRÉPARATION DE PNEUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2017 JP 2017075538**

(43) Date of publication of application:
**10.10.2018 Bulletin 2018/41**

(73) Proprietor: **Sumitomo Rubber Industries, Ltd. Kobe-shi, Hyogo 651-0072 (JP)**

(72) Inventor: **HAMAMURA, Kenji Kobe-shi,, Hyogo 651-0072, (JP)**

(74) Representative: **TBK Bavariaring 4-6 80336 München (DE)**

(56) References cited:
**EP-A1- 2 554 553     EP-A1- 2 738 225
EP-A1- 3 255 090     US-A1- 2007 197 714**

**Description**

TECHNICAL FIELD

The present invention relates to a method for preparing a rubber composition and a method for preparing a tire using the rubber composition, obtained by the above-mentioned method for preparing a rubber composition.

BACKGROUND OF THE INVENTION

Abrasion resistance is one of the important characteristics of tires for vehicle transportation. To improve the abrasion resistance, there is known a technique which includes the use of fine-particle carbon black having a high reinforcing property (JP 2014-234438 A).
However, compounding a large amount of fine-particle carbon black generates a high amount of heat, which leads to a problem that rubber burning occurs in an extrusion step.

SUMMARY OF THE INVENTION

PROBLEM TO BE SOLVED BY THE INVENTION

It is an object of the present invention to provide a method for preparing a rubber composition which can prevent or suppress occurrence of rubber burning in an extrusion step of the preparing process, while improving abrasion resistance of the rubber composition by compounding a fine-particle carbon black with a high reinforcing property, and also to provide a method for preparing a tire using the rubber composition obtained by the above-mentioned method for preparing the rubber composition.

MEANS TO SOLVE THE PROBLEM

As a result of intensive studies by the inventors, it has been found that when preparing a rubber composition that contains a predetermined styrene butadiene rubber, a butadiene rubber, and a predetermined fine-particle carbon black, the above-mentioned problem can be solved by limiting the types and amounts of vulcanizing chemicals and by adjusting an extrusion speed in the extrusion step of a kneaded product. Furthermore, the inventors have repeatedly considered this matter to complete the present invention.
That is, the present invention provides a method for preparing a rubber composition, the method comprising:

[1] a first step of kneading a rubber component with 50 parts by mass or more of a carbon black having a 24M4DBP oil absorption of 90 mL/100 g or more, preferably 91 mL/100 g or more, more preferably 92 mL/100 g or more, further preferably 93 mL/ 100 g or more, still further preferably 95 mL/ 100 g or more, and yet further preferably 100 mL/100 g or more, based on 100 parts by mass of the rubber component, the rubber component comprising 35 to 70% by mass, preferably 40 to 65% by mass, more preferably 43 to 62% by mass, and further preferably 45 to 60% by mass of a styrene butadiene rubber and 30 to 65% by mass, preferably 35 to 60% by mass, more preferably 38 to 57% by mass, and further preferably 40 to 55% by mass of a butadiene rubber, the styrene butadiene rubber having a styrene content of 15.0 to 40.0% by mass, preferably 20.0 to 40.0% by mass, more preferably 25.0 to 40.0% by mass, further preferably 30.0 to 40.0% by mass, and still further preferably 35.0 to 39.0% by mass and a vinyl content of 10.0 to 30.0%, preferably 13.0 to 25.0%, and more preferably 15.0 to 20.0%;
a second step of adding and kneading 1.8 parts by mass or less, preferably 0.4 to 1.8 parts by mass, more preferably 0.6 to 1.7 parts by mass, further preferably 0.6 to 1.6 parts by mass, and still further preferably 0.6 to 1.5 parts by mass of sulfur, and 1.9 parts by mass or less, preferably 0.1 to 1.9 parts by mass, more preferably 0.2 to 1.8 parts by mass, and further preferably 0.5 to 1.8 parts by mass of a sulfenamide-based vulcanization accelerator, based on 100 parts by mass of the rubber component, into a kneaded product obtained in the first step; and
a third step of extruding a kneaded product obtained in the second step, wherein an extrusion speed in the third step is less than 35 m/min, preferably 33 m/min or less, and more preferably 30 m/min or less.
[2] The method for preparing a rubber composition according to [1] described above, wherein a cis content of the butadiene rubber is 90% or more, preferably 95% or more.
[3] The method for preparing a rubber composition according to [1] or [2] described above, wherein in the first step, a discharge temperature is 140 to 180°C, preferably 150 to 170°C, and a kneading rotational speed is 20 to 60 rpm, preferably 30 to 50 rpm.
[4] The method for preparing a rubber composition according to any one of [1] to [3] described above, wherein in the second step, a discharge temperature is 80 to 130°C, preferably 90 to 120°C, and a kneading rotational speed is 15 to 45 rpm, preferably 20 to 35 rpm.

[5] A method for preparing a tire, comprising: a step of extruding the rubber composition prepared by the method for preparing a rubber composition according to any one of [1] to [4] described above, into a shape of a tread at an unvulcanization stage to obtain a tread member; a step of forming an unvulcanized tire by laminating and molding the tread member with other tire members on a tire molding machine; and a step of heating and pressurizing the unvulcanized tire in a vulcanizer.

## EFFECTS OF THE INVENTION

According to the method for preparing a rubber composition in the present invention, it is possible to prevent or suppress occurrence of rubber burning in an extrusion step of a kneaded product even when a large amount of fine-particle carbon black is compounded in a rubber component containing a styrene butadiene rubber and a butadiene rubber. The rubber composition, obtained by the method for preparing a rubber composition according to the present invention, can have excellent abrasion resistance. Further, the tire prepared using this rubber composition, especially, the tire having a tread prepared using this rubber composition can also have excellent abrasion resistance.

## DETAILED DESCRIPTION

A method for preparing a rubber composition according to one embodiment of the present disclosure comprises: a first step of kneading a rubber component with 50 parts by mass or more of a carbon black having a 24M4DBP oil absorption of 90 mL/ 100 g or more, based on 100 parts by mass of the rubber component, the rubber component comprising 35 to 70% by mass of a styrene butadiene rubber and 30 to 65% by mass of a butadiene rubber, the styrene butadiene rubber having a styrene content of 15.0 to 40.0% by mass and a vinyl content of 10.0 to 30.0%; a second step of adding and kneading 1.8 parts by mass or less of sulfur and 1.9 parts by mass or less of a sulfenamide-based vulcanization accelerator, into a kneaded product obtained in the first step; and a third step of extruding a kneaded product obtained in the second step, wherein an extrusion speed in the third step is less than 35 m/ min.

Without intending to be restricted by a theory, it is believed that, in the present disclosure, rubber burning is suppressed by limiting types and amounts of vulcanizing chemicals, and further prevented by reducing extrusion speed whereas rubber burning normally tends to occur when fine-particle carbon black having a high reinforcing property, in other words, carbon black with a high structure is compounded into a styrene butadiene rubber and a butadiene rubber. Furthermore, reducing the extrusion speed is considered to contribute to the suppression of breakage of a relatively weak part in the carbon black structure. It is also considered that since rubber burning in a minute area can be prevented and the high structure of the carbon black can be maintained in this way, the abrasion resistance of the resulting rubber composition is synergistically improved.

<Rubber Component>

The rubber component contains a predetermined styrene butadiene rubber (SBR) and a butadiene rubber (BR).

(SBR)

The SBR is not particularly limited, and examples of the SBR include an unmodified emulsion-polymerized styrene butadiene rubber (E-SBR), an unmodified solution-polymerized styrene butadiene rubber (S-SBR), and a modified SBR, such as a modified emulsion polymerized styrene butadiene rubber (modified E-SBR), and a modified solution polymerized styrene butadiene rubber (modified S-SBR), obtained by modifying them. The SBR may be classified into an oil extended type in which expansion oil is added to adjust flexibility and a non-oil extended type in which expansion oil is not added, but both types are usable as the SBR of the rubber component. For example, SBRs manufactured by JSR Corporation, Asahi Kasei Chemicals Corporation, Zeon Corporation, and the like can be used. These SBRs can be used alone or in combination.

The styrene content in SBR is 15.0% by mass to 40.0% by mass. If the styrene content is less than 15.0% by mass, sufficient rubber strength tends not to be obtained. In addition, sufficient grip performance tends not to be obtained. If the styrene content exceeds 40.0% by mass, sufficient fuel efficiency tends not to be obtained. The styrene content in the SBR is preferably 20.0% by mass or more, more preferably 25.0% by mass or more, further preferably 30.0% by mass or more, and still further preferably 35.0% by mass or more. Further, the styrene content is preferably 39.0% by mass or less. It should be noted that the styrene content in the SBR as used herein is a value calculated by $^1$H-NMR measurement.

The vinyl content (1,2-bonded butadiene unit) in SBR is 10.0 to 30.0%. If the vinyl content is less than 10.0%, sufficient rubber strength tends not to be obtained, and in addition, sufficient grip performance tends not to be obtained.

If the vinyl content exceeds 30.0%, sufficient fuel efficiency tends not to be obtained. The vinyl content is preferably 13.0% or more, and more preferably 15.0% or more. Further, the vinyl content is preferably 25.0% or less, and more preferably 20.0% or less. It should be noted that the vinyl content in SBR as used herein is measured by infrared absorption spectrometry.

The content of SBR in the rubber component is 35 to 70% by mass. If the content of SBR deviates from this range, there is a tendency that the effects of the present disclosure are hardly exhibited sufficiently. The content of SBR is preferably 40% by mass or more, more preferably 43% by mass or more, and further preferably 45% by mass or more. Meanwhile, the content of SBR is preferably 65% by mass or less, more preferably 62% by mass or less, and further preferably 60% by mass or less. When SBR of the oil extended type is used as the SBR, the content of the SBR itself as a solid contained in the SBR of the oil extended type is defined as the content of the SBR in the rubber component.

(BR)

The BR is not particularly limited, and any BR commonly used in this field can be suitably used. For example, BRs manufactured by UBE INDUSTRIES, LTD., Zeon Corporation, and the like can be suitably used. These BR can be used alone or in combination.

As the BR, a high-cis BR in which a cis content (cis 1,4-bond content) is 90% or more is preferable because excellent abrasion resistance can be obtained. The cis content in the BR is more preferably 95% or more. It should be noted that the cis content as used herein is a value measured by the infrared absorption spectrometry.

As the BR, a modified BR can be used because the interaction with a filler is more strengthened and excellent fuel efficiency can be achieved. Modified BRs include modified BRs with an end and/or main chain thereof modified; modified BRs (such as those having a condensate or a branched structure) coupled with tin, silicon compounds, etc.; and modified BRs with an end and/or main chain thereof modified by a functional group being able to interact with silica, specifically, a modified BR having at least one selected from the group consisting of a silyl group, an amino group, an amide group, a hydroxyl group, and an epoxy group.

When BR is contained, the content of the BR in the rubber component is 30 to 65% by mass. If the content of the BR deviates from this range, there is a tendency that the effects of the present disclosure are hardly exhibited sufficiently. The content of BR is preferably 35% by mass or more, more preferably 38% by mass or more, and further preferably 40% by mass or more. Further, the content of BR is preferably 60% by mass or less, more preferably 57% by mass or less, and further preferably 55% by mass or less.

(Other Rubber Components)

The rubber component may include a rubber component (other rubber components) other than the SBR and BR. Examples of the other rubber components include an unmodified natural rubber (NR), an epoxidized natural rubber (ENR), an isoprene rubber (IR), a styrene isoprene rubber (SIR), a styrene isoprene butadiene rubber (SIBR), an ethylene propylene diene rubber (EPDM), a chloroprene rubber (CR), an acrylonitrile butadiene rubber (NBR), and the like. It should be noted that the rubber component is preferably composed of only SBR and BR without containing the other rubber components.

<Filler>

In the present embodiment, the predetermined fine-particle carbon black is compounded as a filler. In the present embodiment, other fillers may be compounded, in addition to a predetermined amount of the predetermined fine-particle carbon black. As such other fillers, those commonly used in this field can be used as appropriate. An example of such other fillers is silica.

(Carbon Black)

In the present embodiment, the predetermined fine-particle carbon black refers to a carbon black having a 24M4DBP oil absorption (compressed dibutyl phthalate oil absorption) of 90 mL/ 100 g or more. Here, the 24M4DBP oil absorption is a value measured based on ASTM D3493-91 (Standard Test Method for Carbon Black-n-Dibuty 1 Phthalate Absorption Number of Compressed Sample). These kinds of carbon blacks can be used alone or in combination.

If the 24M4DBP oil absorption of the carbon black is less than 90 mL/100 g, there is a tendency that the effects of the present disclosure cannot be achieved. The 24M4DBP oil absorption is preferably 91 mL/ 100 g or more, more preferably 92 mL/100 g or more, further preferably 93 mL/ 100 g or more, still further preferably 95 mL/100 g or more, and even still further preferably 100 mL/100 g or more. Meanwhile, the upper limit of the 24M4DBP oil absorption is not particularly limited, but is desirably in an appropriate range from the viewpoint of sufficient grip force. For example, the upper limit of the 24M4DBP oil absorption is 200 mL/100 g or less, preferably 180 mL/100 g or less, and more preferably 160 mL/100 g or less.

A nitrogen adsorption specific surface area ($N_2SA$) of the carbon black is preferably 80 $m^2$/g or more, and more preferably 100 $m^2$/g or more. The $N_2SA$ is preferably 200 $m^2$/g by mass or less, more preferably 180 $m^2$/g or less, and further preferably 160 $m^2$/g or less. It should be noted that the $N_2SA$ of the carbon black is determined by "A" method of JIS K6217.

An average primary particle size of the carbon black is preferably 5 nm or more, more preferably 10 nm or more, further preferably 15 nm or more, and still further preferably 18 nm or more. Within the above-mentioned range, there is a tendency that the dispersibility of the carbon black can be easily secured. The average primary particle size is preferably 50 nm or less, more preferably 30 nm or less, further preferably 27 nm or less, and still further preferably 25 nm or less. Within the above-mentioned range, there is a tendency that the abrasion resistance and the grip performance can be improved. It should be noted that an average primary particle size of the carbon black can be determined by measuring 400 or more of the primary particles, observed in the field of view, with a transmission electron microscope, and then averaging the measured values.

The carbon black content is 50 parts by mass or more, based on 100 parts by mass of the rubber component. If the carbon black content is less than 50 parts by mass, there is a tendency that the effects of the present disclosure are hardly exhibited sufficiently. Meanwhile, the upper limit of the carbon black content is not particularly limited from the viewpoint of the effects of the present disclosure, but is preferably 100 parts by mass or less, more preferably 90 parts by mass or less, further preferably 80 parts by mass or less, and still further preferably 70 parts by mass or less from the viewpoint of good fuel efficiency and weather resistance.

(Silica)

In the present embodiment, silica may be compounded in the rubber composition. The silica is not particularly limited, and examples of the silica include a dry-method silica (anhydrous silica), a wet-method silica (hydrous silica), and the like, but the wet-method silica is preferable because of a large amount of silanol groups. These types of silica can be used alone or in combination.

A nitrogen adsorption specific surface area ($N_2SA$) of the silica is not particularly limited, preferably 50 $m^2$/g or more, more preferably 100 $m^2$/g or more, and further preferably 150 $m^2$/g or more. When the $N_2SA$ is 50 $m^2$/g or more, the fuel efficiency and abrasion resistance of the tire tend to be improved. The $N_2SA$ is preferably 250 $m^2$/g or less, and more preferably 210 $m^2$/g or less. When the $N_2SA$ is 250 $m^2$/g or less, the dispersion of the silica becomes easy, and the fuel efficiency and abrasion resistance of the tire tend to be improved. Here, the $N_2SA$ of silica is a value measured by a BET method in accordance with ASTM D3037-93.

The silica content is 5 parts by mass to 50 parts by mass, based on 100 parts by mass of the rubber component. The silica content is set at 5 parts by mass or more, which is preferable from the viewpoint of low heat generation. The silica content is set at 50 parts by mass or less because silica tends to be sufficiently dispersed to make the processibility of the rubber composition better. The silica content is preferably 10 parts by mass or more. Meanwhile, the silica content is preferably 40 parts by mass or less, and more preferably 30 parts by mass or less.

(Content of Filler)

When a filler other than carbon black is compounded, the content of the whole filler(s) is preferably 50 parts by mass to 150 parts by mass, based on 100 parts by mass of the rubber component. When the content of the filler(s) is within the above-mentioned range, there is a tendency that the effects of the present disclosure are exhibited sufficiently. The filler content is preferably 55 parts by mass or more. Meanwhile, the filler content is preferably 120 parts by mass or less, more preferably 100 parts by mass or less, and further preferably 80 parts by mass or less.

(Silane Coupling Agent)

A silane coupling agent can be used when silica is compounded. The silane coupling agent is not particularly limited, and any silane coupling agent conventionally used widely in the tire field can be used. Examples of the silane coupling agent include sulfide-based, mercapt-based, vinyl-based, amino-based, glycidoxy-based, nitro-based, chloro-based silane coupling agents, and the like. Among these, sulfide-based silane coupling agents, such as bis(3-triethoxysilylpropyl)tetrasulfide, bis(2-triethoxysilylethyl)tetrasulfide, bis(3-triethoxysilylpropyl)disulfide, and bis(2-triethoxysilylethyl)disulfide, can be suitably used. From the viewpoint of the effect of improving the reinforcing property, bis(3-triethoxysilylpropyl)tetrasulfide and 3-trimethoxysilylpropylbenzothiazolyl tetrasulfide are particularly preferable. These silane coupling agents may be used alone or in combination.

The content of the silane coupling agent is preferably 1 part by mass or more, and more preferably 2 parts by mass or more, based on 100 parts by mass of silica. When the content of the silane coupling agent is 1 part by mass or more, there is a tendency that the processability of the rubber composition can be improved. The content of the silane coupling agent is preferably 20 parts by mass or less, and more preferably 15 parts by mass or less, based on 100 parts by mass of silica. When the content of the silane coupling agent is 20 parts by mass or less, there is a tendency that the compounding effect of the silane coupling agent consistent with the cost can be obtained.

<Sulfur>

In the present embodiment, the rubber composition contains sulfur. As the sulfur, any of powder sulfur, precipitated sulfur, colloidal sulfur, insoluble sulfur, highly dispersible sulfur, soluble sulfur, and the like commonly used in the rubber industry can be suitably used.

The sulfur content is 1.8 parts by mass or less, based on 100 parts by mass of the rubber component. If the sulfur content exceeds 1.8 parts by mass, there is a tendency that rubber burning cannot be prevented or suppressed sufficiently. The sulfur content is preferably 1.7 parts by mass or less, more preferably 1.6 parts by mass or less, and further preferably 1.5 parts by mass or less. Meanwhile, the lower limit of the sulfur content is not particularly limited as long as the sulfur content is an amount commonly used in this field, but is usually 0.4 parts by mass or more, and more preferably 0.6 parts by mass or more. When the sulfur content is 0.4 parts by mass or more, the hardness (Hs) of the rubber composition after vulcanization and the co-crosslinking with an adjacent compounded rubber tend to be sufficiently obtained. It should be noted that the sulfur content is an amount of a pure sulfur component put in the second step, and for example, means an amount of pure sulfur except for oil when insoluble sulfur (containing oil) is used.

<Vulcanization Accelerator>

A vulcanization accelerator used in the present embodiment is a sulfenamide-based vulcanization accelerator. The use of the predetermined vulcanization accelerator in this way contributes to the prevention or suppression of rubber burning. As the sulfenamide-based vulcanization accelerator, any one commonly used in this field can be suitably used. Examples of such a vulcanization accelerator include N-cyclohexyl-2-benzothiazole sulfenamide, N-tert-butyl-2-benzothiazole sulfenamide, N-oxyethylene-2-benzothiazole sulfenamide, N-oxyethylene-2-benzothiazole sulfenamide, N, N'-diisopropyl-2-benzothiazole sulfenamide, and the like. These vulcanization accelerators can be used alone or in combination.

The content of the sulfenamide-based vulcanization accelerator is 1.9 parts by mass or less, based on 100 parts by mass of the rubber component. If the content of the vulcanization accelerator is 1.9 parts by mass or more, there is a tendency that rubber burning cannot be prevented or suppressed sufficiently. The content of the vulcanization accelerator is preferably 1.8 parts by mass or less. Meanwhile, the lower limit of the content of the vulcanization accelerator is not particularly limited as long as the content of the vulcanization accelerator is an amount commonly used in this field, but is usually 0.1 parts by mass or more, preferably 0.2 parts by mass or more, and more preferably 0.5 parts by mass or more.

<Other Compounding Components>

The rubber composition may contain, in addition to the above components, compounding components used conventionally in the rubber industry, for example, a plasticizer or oil, zinc oxide, stearic acid, an anti-aging agent, and the like.

When the plasticizer is contained, the plasticizer content is 1 part by mass or more and preferably 3 parts by mass or more, based on 100 parts by mass of the rubber component from the viewpoint of processibility. The content of the plasticizer is 40 parts by mass or less, and preferably 20 parts by mass or less, from the viewpoint of the abrasion resistance and handling stability. It should be noted that the plasticizer content covers oil contained in the oil-extended rubber and insoluble sulfur. The plasticizers can be used alone or in combination.

Examples of the oil include process oil, vegetable oil, animal oil, and the like. When oil is contained, the oil content is preferably 2 parts by mass or more, and more preferably 5 parts by mass or more, based on 100 parts by mass of the rubber component from the viewpoint of the processibility. The oil content is preferably 40 parts by mass or less from the viewpoint of a load in the process.

<Prepare of Rubber Composition>

In the present embodiment, the rubber composition can be prepared by a preparing method that includes the following first step, second step, and third step.

First step:
step of kneading a rubber component with 50 parts by mass or more of a predetermined carbon black, based on 100 parts by mass of the rubber component, the rubber component comprising 35 to 70% by mass of a predetermined styrene butadiene rubber and 30 to 65% by mass of a butadiene rubber

Second step:
step of adding and kneading 1.8 parts by mass or less of sulfur and 1.9 parts by mass or less of a sulfenamide-based vulcanization accelerator, based on 100 parts by mass of the rubber component, into a kneaded product obtained in the first step

Third step:
step of extruding a kneaded product obtained in the second step at an extrusion speed of less than 35 m/min

In each step, well-known kneading machines can be used. Examples of such a kneading machine include a Banbury mixer, a kneader, an open roll, and the like.

(First step)

The first step is a step of kneading a mixture of a predetermined rubber component and 50 parts by mass or more of a predetermined carbon black, based on 100 parts by mass of the rubber component. If there are other components, except for these components, that are compounded in the rubber composition, all but sulfur and a vulcanization accelerator are kneaded in this first step.

A kneading time in the first step is usually 1 to 10 minutes, and preferably 2 to 7 minutes. A kneading rotational speed is usually 20 to 60 rpm, and preferably of 30 to 50 rpm. A discharge temperature is usually 140 to 180°C, and preferably 150 to 170°C. These ranges are preferable from the viewpoint of efficiently obtaining a kneaded product in which the respective components are well dispersed.

(Second step)

The second step is a step of adding and kneading 1.8 parts by mass or less of sulfur and 1.9 parts by mass or less of a sulfenamide-based vulcanization accelerator, based on 100 parts by mass of the rubber component, into a kneaded product obtained in the first step. By using the sulfenamide-based vulcanization accelerator as the vulcanization accelerator, and reducing the amount of usage of the sulfur and the vulcanization accelerator, rubber burning can be prevented or suppressed, which contributes to the improvement of the abrasion resistance of the obtained rubber composition.

A kneading time in the second step is usually 1 to 10 minutes, and preferably 2 to 7 minutes. A kneading rotational speed is usually 15 to 45 rpm, and preferably 20 to 35 rpm. A discharge temperature is usually 80 to 130°C, and preferably 90 to 120°C. These ranges are preferable from the viewpoint of efficiently obtaining a kneaded product in which the respective components are well dispersed.

(Third step)

The third step is a step of extruding a kneaded product obtained in the second step at an extrusion speed of less than 35 m/min. By reducing the extrusion speed, the breakage of the carbon black structure can be suppressed. This can contribute to the improvement of the abrasion resistance of the obtained rubber composition. The lower limit of the extrusion speed is not particularly limited, but usually preferable to be 25 m/min or more from the viewpoint of production efficiency. The extruding of this step can be conducted by a usual method.

The extrusion speed in the third step is more preferably 33 m/min or less, and even more preferably 30 m/min or less.

<Preparing Method of Tire>

The above-mentioned rubber composition can be suitably used in various tire members (for example, tread, sidewall, carcass, clinch, bead, etc.), because of excellent rubber properties, such as abrasion resistance. In particular, the rubber composition is preferably used in the tire tread.

In the present embodiment, the tire can be prepared by a normal method using the above-mentioned rubber composition. That is, the rubber composition is extruded along the shape of a desired tire member (for example, the shape of a tread) in an unvulcanization stage, laminated with other tire members on a tire molding machine, and molded by the normal method to form an unvulcanized tire. Then, the unvulcanized tire is heated and pressurized in a vulcanizer, thus making it possible to prepare the tire.

These tires can be used as tires for any vehicle, but are particularly suitable for use as tires for trucks and buses or the like, which are load vehicles.

EXAMPLES

Although the present disclosure will be described on the basis of examples, the present disclosure is not limited only to these examples.
Hereinafter, various types of chemicals used in Examples and Comparative Examples will be collectively described.
Styrene butadiene rubber (SBR): JSR0122, manufactured by JSR Corporation (styrene content: 37% by mass, vinyl content: 18%, weight average molecular weight (Mw): 630,000, Tg: -35°C, oil-extended product (oil amount: 25.4%))
Butadiene Rubber (BR): BR730, manufactured by JSR Corporation (cis content: 95%, weight average molecular weight (Mw): 670,000, Tg: -108°C)
Carbon Black (CB) 1: N134, manufactured by Tokai Carbon Co., Ltd. (24MDBP oil absorption: 103 mL/100 g; $N_2SA$: 143 m$^2$/g; average primary particle size: 23 nm)
Carbon Black (CB) 2: Seast N220, manufactured by Mitsubishi Chemical Corporation (24MDBP oil absorption: 93 mL/100 g; $N_2SA$: 114 m$^2$/g; average primary particle size: 29 nm)
Carbon Black (CB) 3: Seast N330, manufactured by Mitsubishi Chemical Corporation (24MDBP oil absorption: 88 mL/100 g; $N_2SA$: 78 m$^2$/g; average primary particle size: 43 nm)
Sulfur: HK-200-5, manufactured by Hosoi Chemical Industry Co., Ltd. (Oil content: 5% by mass)
Vulcanization Accelerator: NOCCELER NS-P (TBBS, N-tert-butyl-2-benzothiazole sulfenamide), manufactured by Ouchi Shinko Chemical Industrial Co., Ltd.

Examples 1 to 6 and Comparative Examples 1 to 3

(First step)

According to the formulations shown in Table 1, the chemicals were kneaded at 50 rpm for 5 minutes using a 1.7 L Banbury mixer up to a discharge temperature of 150°C to obtain a kneaded product.

(Second step)

According to the formulations shown in Table 1, sulfur and a vulcanization accelerator were added to the kneaded product obtained in the first step, which was then kneaded at 20 rpm for 5 minutes using a biaxial open roll up to 80°C to obtain a kneaded product.

(Third Step)

The kneaded product obtained in the second step was extruded at an extrusion speed shown in Table 1 to obtain an unvulcanized rubber composition.

<Scorch Time Index>

The obtained unvulcanized rubber compositions were tested according to the description of the Mooney Scorch test of unvulcanized rubber physical test methods specified by JIS K6300 to measure t5 [minutes] at 130.0±0.5°C. The measured result of each rubber composition is indicated by an index, assuming that the result of Comparative Example 1 is 100 (scorch time index). When the scorch time is shortened, a problem of rubber burning occurs. In this evaluation, the target value of scorch time index is 110 or more. When the Mooney scorch time index is less than the target value, there is a possibility that a problem of rubber burning occurs in a finish kneading process, an extrusion process, and the like.

<Abrasion Resistance>

The obtained unvulcanized rubber composition was vulcanized on conditions of 170°C for 10 minutes to produce a vulcanized rubber sheet. The vulcanized rubber sheet was measured for abrasion amount on conditions of room temperature, a load of 1.0 kgf, and a slippage rate of 30%, using a Lambone type abrasion tester. The measurement result of each vulcanized rubber sheet is indicated by an index using the following calculation formula, assuming that the measurement result of Comparative Example 1 is 100. It shows that the larger the abrasion resistance index is, the better the abrasion resistance performance becomes. In this evaluation, the target value of abrasion resistance index is 80 or more.

$$(\text{Abrasion Resistance Index}) = (\text{Abrasion Amount of Comparative Example 1})/(\text{Abrasion Amount of Each Formulation}) \times 100$$

Table 1

| | | Example | | | | | | Comparative Example | | |
|---|---|---|---|---|---|---|---|---|---|---|
| | | 1 | 2 | 3 | 4 | 5 | 6 | 1 | 2 | 3 |
| Compounding amount (part by mass) | | | | | | | | | | |
| First step | SBR (solid) | 56.4 (45) | 56.4 (45) | 75.2 (60) | 56.4 (45) | 56.4 (45) | 56.4 (45) | 56.4 (45) | 56.4 (45) | 56.4 (45) |
| | BR | 55 | 55 | 40 | 55 | 55 | 55 | 55 | 55 | 55 |
| | CB1 | 55 | 55 | 55 | 45 | 35 | 15 | 55 | 55 | - |
| | CB2 | - | - | - | 10 | 20 | 40 | - | - | - |
| | CB3 | - | - | - | - | - | - | - | - | 55 |
| Second step | Sulfur | 1.4 | 1.1 | 1.4 | 1.4 | 1.4 | 1.4 | 1.4 | 2.0 | 1.4 |
| | Vulcanization accelerator | 1.8 | 1.8 | 1.8 | 1.8 | 1.8 | 1.8 | 1.8 | 1.5 | 1.8 |
| Third step | Extrusion speed (m/min) | 28 | 28 | 28 | 28 | 28 | 28 | 35 | 28 | 28 |
| Evaluation | Abrasion resistance index | 100 | 92 | 92 | 92 | 88 | 83 | 100 | 88 | 75 |
| | Scorch time index | 111 | 111 | 111 | 117 | 122 | 128 | 100 | 100 | 106 |

According to the present disclosure, it is possible to provide a method for preparing a rubber composition with excellent abrasion resistance.

A method for preparing a rubber composition comprising: a first step of kneading 100 parts by mass of a rubber component comprising 35 to 70% by mass of a styrene butadiene rubber having a styrene content of 15 to 40% by mass and a vinyl content of 10 to 30% and 30 to 65% by mass of a butadiene rubber with 50 parts by mass or more of a carbon black having a 24M4DBP oil absorption of 90 mL/ 100 g or more; a second step of adding and kneading 1.8 parts by mass or less of sulfur and 1.9 parts by mass or less of a sulfenamide-based vulcanization accelerator, based on 100 parts by mass of the rubber component, into a kneaded product obtained in the first step; and a third step of extruding a kneaded product obtained in the second step with an extrusion speed less than 35 m/min.

**Claims**

1. A method for preparing a rubber composition, the method comprising:

   a first step of kneading a rubber component with 50 parts by mass or more of a carbon black having a 24M4DBP oil absorption of 90 mL/100 g or more, based on 100 parts by mass of the rubber component, the rubber component comprising 35 to 70% by mass of a styrene butadiene rubber and 30 to 65% by mass of a butadiene rubber, the styrene butadiene rubber having a styrene content of 15.0 to 40.0% by mass and a vinyl content of 10.0 to 30.0%;
   a second step of adding and kneading 1.8 parts by mass or less of sulfur and 1.9 parts by mass or less of a sulfenamide-based vulcanization accelerator, based on 100 parts by mass of the rubber component, into a kneaded product obtained in the first step; and
   a third step of extruding a kneaded product obtained in the second step, wherein an extrusion speed in the third step is less than 35 m/min.

**2.** The method for preparing a rubber composition according to claim 1,
wherein a cis content of the butadiene rubber is 90% or more.

**3.** The method for preparing a rubber composition according to claim 1 or 2,
wherein in the first step, a kneading rotational speed is 20 to 60 rpm, and a discharge temperature is 140 to 180°C.

**4.** The method for preparing a rubber composition according to any one of claims 1 to 3,
wherein in the second step, a kneading rotational speed is 15 to 45 rpm, and a discharge temperature is 80 to 130°C.

**5.** A method for preparing a tire, the method comprising:

a step of extruding the rubber composition prepared by the method for preparing a rubber composition according to any one of claims 1 to 4, into a shape of a tread at an unvulcanization stage to obtain a tread member;
a step of forming an unvulcanized tire by laminating and molding the tread member with other tire members on a tire molding machine; and
a step of heating and pressurizing the unvulcanized tire in a vulcanizer.

**Patentansprüche**

**1.** Verfahren zur Herstellung einer Kautschukzusammensetzung, wobei das Verfahren umfasst:

einen ersten Schritt des Knetens einer Kautschukkomponente mit 50 Massenteilen oder mehr eines Carbon Blacks mit einer 24M4DBP-Ölabsorption von 90 ml/100 g oder mehr, bezogen auf 100 Massenteile der Kautschukkomponente, wobei die Kautschukkomponente 35 bis 70 Massen-% eines Styrol-Butadien-Kautschuks und 30 bis 65 Massen-% eines Butadien-Kautschuks umfasst, wobei der Styrol-Butadien-Kautschuk einen Styrolgehalt von 15,0 bis 40,0 Massen-% und einen Vinylgehalt von 10,0 bis 30,0% aufweist;
einen zweiten Schritt des Hinzufügens und Knetens von 1,8 Massenteilen oder weniger an Schwefel und 1,9 Massenteilen oder weniger eines Vulkanisationsbeschleunigers auf Sulfenamidbasis, bezogen auf 100 Massenteile der Kautschukkomponente, zu einem in dem ersten Schritt erhaltenen Knetprodukt; und
einen dritten Schritt der Extrusion eines im zweiten Schritt gewonnenen Knetprodukts,
wobei eine Extrusionsgeschwindigkeit im dritten Schritt weniger als 35 m/min beträgt.

**2.** Verfahren zur Herstellung einer Kautschukzusammensetzung nach Anspruch 1,
wobei der cis-Gehalt des Butadienkautschuks 90% oder mehr beträgt.

**3.** Verfahren zur Herstellung einer Kautschukzusammensetzung nach Anspruch 1 oder 2,
wobei im ersten Schritt eine Knetdrehzahl 20 bis 60 U/min und eine Austrittstemperatur 140 bis 180°C beträgt.

**4.** Verfahren zur Herstellung einer Kautschukzusammensetzung nach einem der Ansprüche 1 bis 3,
wobei im zweiten Schritt eine Knetdrehzahl 15 bis 45 U/min und eine Austrittstemperatur 80 bis 130°C beträgt.

**5.** Verfahren zur Herstellung eines Reifens, wobei das Verfahren umfasst:

einen Schritt des Extrudierens der Kautschukzusammensetzung, die durch das Verfahren zur Herstellung einer Kautschukzusammensetzung nach einem der Ansprüche 1 bis 4 hergestellt wurde, in eine Form einer Lauffläche in einem nicht vulkanisierten Zustand, um ein Laufflächenelement zu erhalten;
einen Schritt der Bildung eines nicht vulkanisierten Reifens durch Laminieren und Formen des Laufflächenelements mit anderen Reifenelementen auf einer Reifenformmaschine; und
ein Schritt der Erwärmung und Druckbeaufschlagung des nicht vulkanisierten Reifens in einem Vulkanisiergerät.

**Revendications**

**1.** Procédé de préparation d'une composition de caoutchouc, le procédé comprenant :

une première étape de malaxage d'un composant caoutchouc avec 50 parties en masse ou plus d'un noir de carbone présentant une absorption d'huile 24M4DBP de 90 ml/100 g ou plus, sur la base de 100 parties en masse du composant caoutchouc, le composant caoutchouc comprenant 35 à 70% en masse d'un caoutchouc de styrène butadiène et 30 à 65 % en masse d'un caoutchouc de butadiène, le caoutchouc de styrène butadiène présentant une teneur en styrène de 15,0 à 40,0 % en masse et une teneur en vinyle de 10,0 à 30,0 % ;

une deuxième étape d'ajout et de malaxage de 1,8 partie en masse ou moins de soufre et de 1,9 partie en masse ou moins d'un accélérateur de vulcanisation à base de sulfènamide, sur la base de 100 parties en masse du composant caoutchouc, dans un produit malaxé obtenu dans la première étape ; et

une troisième étape d'extrusion d'un produit malaxé obtenu dans la deuxième étape, dans lequel une vitesse d'extrusion dans la troisième étape est inférieure à 35 m/min.

2. Procédé de préparation d'une composition de caoutchouc selon la revendication 1, dans lequel la teneur en cis du caoutchouc de butadiène est de 90 % ou plus.

3. Procédé de préparation d'une composition de caoutchouc selon la revendication 1 ou 2,
dans lequel dans la première étape, une vitesse de rotation de malaxage est de 20 à 60 tours/minute, et une température de déchargement est de 140 à 180 °C.

4. Procédé de préparation d'une composition de caoutchouc selon l'une quelconque des revendications 1 à 3,
dans lequel dans la deuxième étape, une vitesse de rotation de malaxage est de 15 à 45 tours/minute, et une température de déchargement est de 80 à 130 °C.

5. Procédé de préparation d'un pneu, le procédé comprenant :

une étape d'extrusion de la composition de caoutchouc préparée par le procédé de préparation d'une composition de caoutchouc selon l'une quelconque des revendications 1 à 4, sous la forme d'une bande de roulement à un stade de non-vulcanisation pour obtenir un élément de bande de roulement ;

une étape de formation d'un pneu non vulcanisé par le laminage et le moulage de l'élément de bande de roulement avec d'autres éléments de pneu sur une machine de moulage de pneu ; et

une étape de chauffage et de mise sous pression du pneu non vulcanisé dans un vulcanisateur.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014234438 A